# EUROPÄISCHE PATENTSCHRIFT

(11) **EP 1 179 784 B1**
(45) Veröffentlichungstag und Bekanntmachung des Hinweises auf die Patenterteilung: **08.03.2006**
(21) Anmeldenummer: 00117442.4
(22) Anmeldetag: 11.08.2000
(51) Int. Cl.: G06F 13/40

(54) **Automatisierungsgerät**
Automation device
Appareil d'automatisation

(43) Veröffentlichungstag der Anmeldung: 13.02.2002
(73) Patentinhaber: SIEMENS AKTIENGESELLSCHAFT, 80333 München (DE)
(72) Erfinder: Brousek, Norbert, 90766 Fuerth (DE)

(56) Entgegenhaltungen:
- EP-A- 0 266 016
- US-A- 5 517 623
- US-A- 5 522 042

## Beschreibung

Die Erfindung betrifft ein Automatisierungsgerät gemäß dem Oberbegriff des Anspruchs 1.

Ein derartiges Automatisierungsgerät ist unter der Bezeichnung ET 200 aus dem Katalog ST 70 der Siemens AG bekannt. Bei diesem Automatisierungsgerät ist ein Busteil mit Steckplätzen vorgesehen, in die einzelne Module einsteckbar sind, wobei die Module je nach gewünschter Funktionalität auswählbar sind. So sind z. B. Ein-/Ausgabemodule oder Funktionsmodule, beispielsweise zum Zählen oder zum Regeln, in dem Automatisierungsgerät verwendbar. Diese Module sind über einen im Busteil des Automatisierungsgerätes vorgesehenen internen Bus elektrisch leitend und kommunikativ miteinander verbunden. Ein spezielles Modul, das sog. Kopfmodul, enthält in einem Speicher Daten über das Automatisierungsgerät oder zum Betrieb des Automatisierungsgerätes erforderliche Daten, wie z.B. Parameterdaten oder Busprotokollparameter.

Ein derartiges Automatisierungsgerät bildet zusammen mit weiteren Automatisierungsgeräten ein Automatisierungssystem, das insgesamt die Steuerung und/oder Überwachung eines technischen Prozesses übernimmt. Dabei steuert bzw. überwacht jedes der Automatisierungsgeräte selbständig, jedoch in Koordination mit anderen Automatisierungsgeräten und unter Überwachung einer zentralen Instanz, z.B. eines Leitrechners, des Automatisierungssystems einen technischen Teilprozess. Die Überwachung und/oder Koordination erfolgt dabei über einen Feldbus, an den das oder jedes Automatisierungsgeräte angeschlossen ist. So sind beispielsweise bei einer Fließbandproduktion am Fließband mehrere sogenannte Bearbeitungszentren (z.B. Vormontage, Montage, Endkontrolle, Verpackung) vorgesehen.

Jedes Automatisierungsgerät kann dann die Funktion eines der Bearbeitungszentren selbständig, oder in Koordination mit anderen Automatisierungsgeräten und unter Überwachung des Leitrechners des Automatisierungssystems steuern und/oder überwachen.

Nachteilig bei diesem bekannten Automatisierungsgerät ist jedoch, dass im Falle eines erforderlich werdenden Austausches des Kopfmoduls die im Speicher des Kopfmoduls gespeicherten Daten verloren gehen und diese erst in ein neues Kopfmodul eingeschrieben werden müssen. Dies ist aufwendig und fehleranfällig.

Der Erfindung liegt daher die Aufgabe zugrunde, ein Automatisierungsgerät anzugeben, das unter Vermeidung einer solchen Fehlerquelle auch im Falle eines erforderlich werdenden Modulwechsels unmittelbar nach dem Austausch des Moduls wieder betriebsfähig ist.

Diese Aufgabe wird erfindungsgemäß mit den Merkmalen des Anspruchs 1 gelöst. Vorteilhafte Ausgestaltungen und Weiterbildungen sind Gegenstand der Unteransprüche.

Das Automatisierungsgerät weist einen Busteil mit einem Busanschluss auf, von dem ein interner Bus ausgeht. Das Busteil weist zur Aufnahme eines Moduls mindestens einen Steckplatz auf, der wiederum Buskontakte zur Kontaktierung des internen Busses aufweist, wobei ein an dem Steckplatz befindliches Modul Kommunikationsteilnehmer am internen Bus ist. Im Busteil ist ein Speicher vorgesehen, der durch das Modul beschreibbar und/oder auslesbar ist.

Die mit der Erfindung erzielten Vorteile bestehen insbesondere darin, dass durch die Anordnung des Speichers im Busteil der Inhalt des Speichers auch im Falle eines Austausches eines in einem Steckplatz befindlichen Moduls erhalten bleibt. Das ansonsten erforderliche Einschreiben des Inhalts des bisherigen Speichers in den neuen Speicher entfällt und ist daher nicht mehr notwendig. Damit sind einerseits typische Fehlerquellen ausgeschaltet. Andererseits wird die Zeit, während derer das Automatisierungsgerät nicht betriebsfähig ist, auf die für den Wechsel des Moduls erforderliche Zeit begrenzt.

Durch den Anschluss des Speichers an den internen Bus ist vorteilhafterweise ein Zugriff auf den Speicher über den internen Bus möglich, ohne dass im Bereich der Steckplätze neben den Buskontakten zusätzliche Kontakte erforderlich sind.

Wenn der Speicher ein selbständiger Kommunikationsteilnehmer am internen Bus ist, ist ein Zugriff auf den Speicher unter Ausnutzung des für den internen Bus vorgesehenen Busprotokolls möglich. Der Zugriff auf den Speicher gemäß dem Busprotokoll vermeidet Konflikte beim Zugriff eines Moduls über den Bus auf den Speicher mit einer eventuell gleichzeitig vorgesehenen Kommunikation zwischen zwei Modulen über den Bus.

Ferner ist ein Zugriff auf den Speicher für jedes Modul möglich, das seinerseits selbst Kommunikationsteilnehmer am internen Bus ist. Während bei dem bekannten Automatisierungsgerät nur eines der Module Zugriff auf den Speicher hatte, kann nunmehr jedes der Module auf den Speicher zugreifen, so dass die Menge der Informationen erhöht ist, die sinnvollerweise in diesem Speicher abgelegt werden kann. In dem Speicher können also zusätzlich zu Parametern für das Automatisierungsgerät auch individuelle Parameter für jedes einzelne Modul abgelegt werden.

Durch Vorgabe der Busadresse des Speichers sind in einem Automatisierungssystem mehrere gleichartige Automatisierungsgeräte verwendbar. Grund hierfür ist, dass für jedes der Automatisierungssysteme für dessen Speicher eine eindeutige Busadresse vorgegeben werden kann. Somit bleibt ein Zugriff eines Moduls auf einen Speicher stets eindeutig. Im Ergebnis wird damit selbst ein Zugriff eines Moduls eines ersten Automatisierungsgerätes auf den Speicher eines zweiten Automatisierungsgerätes möglich. Dies ist sinnvoll, wenn Speicherinhalte abgeglichen werden müssen, etwa beim Anschluss eines zusätzlichen Automatisierungsgerätes an ein bestehendes Automatisierungssystem. Dann kann z.B. der Inhalt des Speichers eines bereits in Betrieb befindlichen Automatisierungsgerätes mittels eines seiner Module ausgelesen und in den Speicher des zusätzlichen Automatisierungsgerätes eingeschrieben werden.

Wenn die Busadresse des Speichers mittels einer am Busteil vorgesehenen Einstellvorrichtung vorgebbar ist, ist die Busadresse schnell, ggf. von Hand, direkt am Automatisierungsgerät einstellbar.

Vorteilhafterweise ist die Busadresse des Speichers mittels einer Einstellsoftware vorgebbar. Dann kann die Busadresse ausgehend von einer zentralen Stelle vorgegeben werden. Zudem können eventuelle Adresskonflikte automatisch erkannt werden, weil die Möglichkeit gegeben ist, sämtliche am Bus bereits vergebenen Adressen z.B. in einer Tabelle zu speichern und vor der Vergabe der neuen Busadresse diese mit den in der Tabelle gespeicherten Adressen zu vergleichen. Entsprechend wird die Adresse tatsächlich erst dann zugewiesen, wenn sie nicht bereits anderweitig vergeben wurde.

Gemäß einer alternativen Ausführungsform weist der Steckplatz zusätzliche Kontaktstellen auf, mit denen der Speicher elektrisch leitend verbunden ist. Der Zugriff auf den Speicher ist dann vorteilhaft unabhängig von einer eventuellen Kommunikation zwischen den Modulen über den internen Bus möglich. Da nicht erst eine Berechtigung zur Benutzung des Busses abgewartet werden muss, ist der Zugriff auf den Speicher damit jederzeit möglich.

Wenn die zusätzlichen Kontaktstellen Kontakte eines Speicherbusses zum Zugriff auf den Speicher sind, ist ein Zugriff auf den Speicher mittels eines für den Speicherbus definierten Protokolls möglich. Ein derartiges Protokoll ermöglicht z.B. eine Fehlererkennung sowie Fehlerkorrektur und gestattet den abschnittsweisen Zugriff auf den Speicher, um z.B. den Speicherzugriff zugunsten einer Kommunikation mit einem anderen Modul zu unterbrechen. Die zusätzlichen Kontaktstellen sind dann Speicherbuskontaktstellen eines Speicherbusses, über den der Zugriff auf den Speicher erfolgt. Der Speicherbus ist unabhängig vom internen Bus, so dass ein Zugriff eines ersten Moduls auf den Speicher zeitgleich mit einer Kommunikation zwischen zwei anderen Modulen über den internen Bus möglich ist.

Zweckmäßigerweise ist der Speicher ein nicht-flüchtiger Speicher, d.h. ein Speicher, dessen Inhalt auch bei einem Spannungsausfall erhalten bleibt. Mit einem derartigen Speicher ist ein Wiederanlauf des Automatisierungsgerätes unmittelbar bei Spannungswiederkehr möglich. Vorzugsweise kommt als Speicher ein sogenanntes EEPROM oder ein sogenanntes FLASH-EPROM zum Einsatz.

Nachfolgend werden Ausführungsbeispiele der Erfindung anhand einer Zeichnung näher erläutert. Darin zeigen:
- FIG 1: ein bekanntes Automatisierungsgerät,
- FIG 2: ein Automatisierungssystem mit mehreren über einen Feldbus verbundenen Automatisierungsgeräten,
- FIG 3: ein erstes Ausführungsbeispiel des erfindungsgemäßen Automatisierungsgerätes,
- FIG 4: ein Busmodul des Automatisierungsgerätes gemäß dem ersten Ausführungsbeispiel,
- FIG 5: ein zweites Ausführungsbeispiel des erfindungsgemäßen Automatisierungsgerätes, und
- FIG 6: ein Busmodul des Automatisierungsgerätes gemäß dem zweiten Ausführungsbeispiel.

Einander entsprechende Teile sind in allen Figuren mit den gleichen Bezugszeichen versehen.

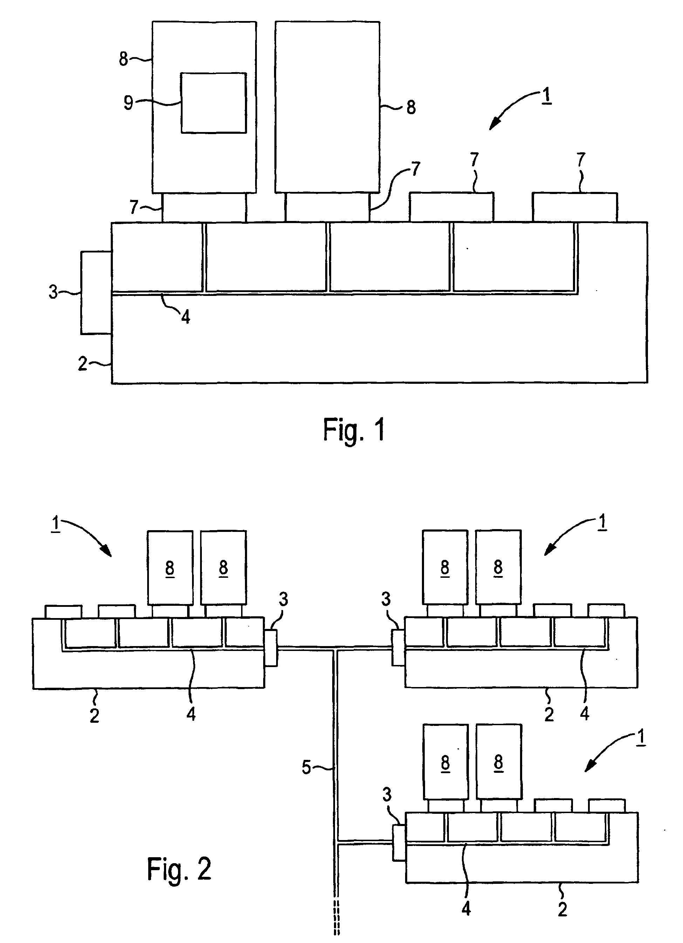

FIG 1 zeigt schematisch ein bekanntes Automatisierungsgerät 1 mit einem Busteil 2. Das Busteil 2 weist Steckplätze 7 auf, in die Module 8 einsteckbar sind. Die Steckplätze 7 sind untereinander und mit einem Busanschluß 3 über einen im Busteil 2 vorgesehenen internen Bus 4 elektrisch leitend und kommunikativ verbunden.

Über den internen Bus 4 tauschen die Module 8 untereinander oder mit Modulen 8 eines weiteren Automatisierungsgerätes 1 Daten aus. Zum Anschluss des Automatisierungsgerätes 1 an einen externen Bus 5 (FIG 2) ist der Busanschluss 3 vorgesehen. Der externe Bus 5 ist ein sogenannter Feldbus, z.B. der PROFIBUS. Zur Unterscheidung vom internen Bus 4 wird der externe Bus 5 im folgenden daher als Feldbus 5 bezeichnet.

Das Automatisierungsgerät 1 dient in nicht näher dargestellter Art und Weise zur Steuerung und/oder Überwachung eines externen technischen Prozesses oder Teilprozesses. Dazu weisen die Module 8 (nicht dargestellte) Außenkontakte auf, um den Anschluss einzelner Elemente des technischen Prozesses, wie z.B. Sensoren (Messfühler, Endschalter, o.ä.) oder Aktoren (Motoren, Hydraulikaggregate, etc.), zu ermöglichen.

In dem bekannten Automatisierungsgerät 1 ist in zumindest einem der Module 8 ein Speicher 9 vorgesehen. Das Modul 8 mit dem Speicher 9 wird als Kopfmodul bezeichnet. In dem Speicher 9 sind z.B. Parameterdaten des Automatisierungsgerätes 1 oder des Kopfmoduls 8 gespeichert. Muss aufgrund eines Defektes das Kopfmodul 8 ausgewechselt werden, so gehen die im Speicher 9 hinterlegten Daten verloren. Bei einem neuen Kopfmodul 8 müssen die entsprechenden Daten wieder neu in den Speicher 9 eingeschrieben werden. Ein solcher Vorgang ist aufwendig, beinhaltet Fehlerquellen und erfordert bezüglich der Bedienperson ein spezielles Fachwissen.

FIG 2 zeigt mehrere Automatisierungsgeräte 1, die über einen Feldbus 5 elektrisch leitend und kommunikativ verbunden sind. Der Busanschluss 3 dient zur Kopplung des internen Busses 4 mit dem Feldbus 5. Wenn der interne Bus 4 und der Feldbus 5 unterschiedliche Protokolle verwenden, bewirkt der Busanschluss auch die erforderliche Protokollumsetzung. Wenn dagegen der interne Bus 4 und der Feldbus 5 das gleiche Protokoll verwenden, ist der interne Bus 4 quasi eine Fortsetzung des Feldbusses 5 im Innern des Automatisierungsgerätes 1.

Die Automatisierungsgeräte 1 gehören damit zu einem nur ausschnittsweise dargestellten Automatisierungssystem, das insgesamt die Steuerung und/oder Überwachung des technischen Prozesses übernimmt. Dabei steuert bzw. überwacht jedes der Automatisierungsgeräte 1 selbständig, oder in Koordination mit anderen Automatisierungsgeräten 1 und unter Überwachung des Automatisierungssystems einen technischen Teilprozess. Die Überwachung und/oder Koordination erfolgt dabei über den Feldbus 5 und schließlich - soweit einzelne Module 8 betroffen sind - über dessen Fortsetzung, nämlich den internen Bus 4.

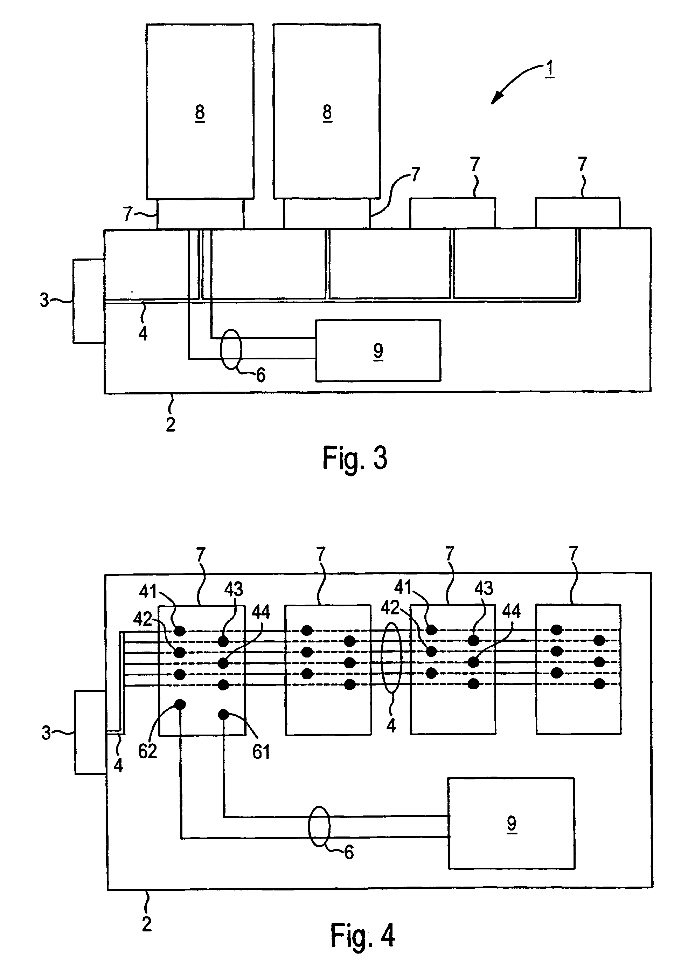

FIG 3 zeigt ein Automatisierungsgerät 1 gemäß einem Ausführungsbeispiel der Erfindung. Im Busteil 2 des Automatisierungsgeräts 1 ist ein Speicher 9 vorgesehen. Hinsichtlich seiner Funktion entspricht dieser Speicher 9 dem gemäß dem Stand der Technik im Kopfmodul 8 vorgesehenen Speicher 9.

Die Steckplätze 7 sind untereinander und mit dem Busanschluss 3 über den internen Bus 4 verbunden. Einer der Steckplätze ist mit dem Speicher 9 über einen zusätzlichen internen Bus 6, im folgenden Speicherbus 6 genannt, verbunden. Über diesen Speicherbus 6 erfolgt ein lesender und/oder schreibender Zugriff auf den Speicher 9. Ein derartiger Zugriff ist nur mittels desjenigen Moduls 8 möglich, das in dem Steckplatz 7 eingesteckt ist, der mit dem Speicherbus 6 verbunden ist.

FIG 4 zeigt zu dem Ausführungsbeispiel gemäß FIG 3 schematisch den Aufbau des Busteils 2. Jeder Steckplatz 7 umfasst eine Anzahl von Kontaktstellen 41, 42, 43, 44, die über einzelne Leitungen des internen Busses 4 elektrisch leitend miteinander verbunden sind. Einer der Steckplätze 7 weist neben den Kontaktstellen 41, 42, 43, 44 des internen Busses 4 zusätzliche Kontaktstellen oder Speicherbuskontakte 61, 62 auf. Der Speicher 9 ist über Leitungen des Speicherbusses 6 mit den Speicherbuskontakten 61, 62 verbunden. Der Speicherbus 6 ist z.B. ein serieller Bus, z.B. ein I²C-Bus, mittels dessen der Zugriff auf den Speicher 9 erfolgt.

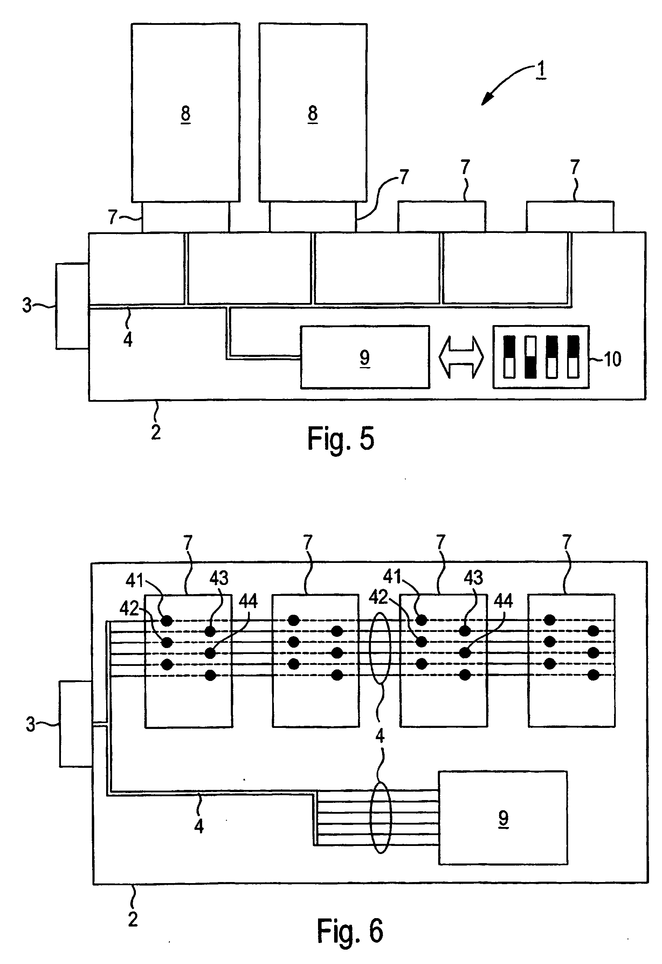

FIG 5 zeigt ein weiteres Ausführungsbeispiel der Erfindung, wobei der Speicher 9 wiederum im Busteil 2 vorgesehen ist. Der Speicher 9 ist an den internen Bus 4 angeschlossen, über den der Zugriff auf den Speicher 9 erfolgt. Der Speicher 9 ist ein selbständiger Kommunikationsteilnehmer sowohl am internen Bus 4 wie auch am Feldbus 5. Um als selbständiger Kommunikationsteilnehmer ansprechbar zu sein, muss der Speicher 9 eine eigene Busadresse aufweisen. Diese ist mittels einer Einstellvorrichtung 10 vorgebbar. Als Einstellvorrichtung 10 ist ein sogenannter DIL-Schalter oder DIP-Schalter dargestellt. Unter der Busadresse ist der Speicher 9 für jeden anderen Kommunikationsteilnehmer, beispielsweise für ein Modul 8, erreichbar.

FIG 6 zeigt zu dem Ausführungsbeispiel gemäß FIG 5 schematisch den Aufbau des Busteils 2. Jeder Steckplatz 7 umfasst die Kontaktstellen 41, 42, 43, 44, die über Leitungen des internen Buses 4 elektrisch miteinander verbunden sind. Auch der Speicher 9 ist an die Leitungen des internen Busses 4 angeschlossen.

Das Automatisierungsgerät 1 umfasst somit ein Busteil 2, das eine Anzahl von Steckplätzen 7 für Funktionsmodule 8 aufweist. In dem Busteil 2 verläuft ein interner Bus 4, an den die Module 8 in deren Steckplätzen 7 angeschlossen sind. Ein Speicher 9 zum dauerhaften Ablegen von Parametern des Automatisierungsgerätes 1 ist nunmehr im Busteil 2 vorgesehen, so dass die Parameter auch bei einem Wechsel der Module 8 erhalten bleiben.

## Patentansprüche

1. Automatisierungsgerät (1) mit einem Busteil (2), das einen Busanschluss (3) und zur Aufnahme eines Moduls (8) mindestens einen Steckplatz (7) umfasst, der Buskontakte (41, 42, 43, 44) zur Kontaktierung eines vom Busanschluss (3) ausgehenden internen Busses (4) aufweist, wobei ein an dem Steckplatz (7) befindliches Modul (8) Kommunikationsteilnehmer am internen Bus (4) ist,
**gekennzeichnet durch** einen im Busteil (2) vorgesehenen Speicher (9), der **durch** das Modul (8) beschreibbar und/oder auslesbar ist.

2. Automatisierungsgerät nach Anspruch 1, wobei der Speicher (9) an den internen Bus (4) angeschlossen ist.

3. Automatisierungsgerät nach Anspruch 2, wobei der Speicher (9) ein selbständiger Kommunikationsteilnehmer am internen Bus (4) ist.

4. Automatisierungsgerät nach Anspruch 3, wobei die Busadresse des Speichers (9) vorgebbar ist.

5. Automatisierungsgerät nach Anspruch 4, wobei die Busadresse des Speichers (9) mittels einer am Busteil (2) vorgesehenen Einstellvorrichtung (10) vorgebbar ist.

6. Automatisierungsgerät nach Anspruch 4, wobei die Busadresse des Speichers (9) mittels einer Einstellsoftware vorgebbar ist.

7. Automatisierungsgerät nach Anspruch 1, wobei der Steckplatz (5) zusätzliche Kontaktstellen (61, 62) aufweist, mit denen der Speicher (9) elektrisch leitend verbunden ist.

8. Automatisierungsgerät nach Anspruch 7, wobei die zusätzlichen Kontaktstellen (61, 62) Kontakte eines Speicherbusses (6) zum Zugriff auf den Speicher (9) sind.

9. Automatisierungsgerät nach einem der Ansprüche 1 bis 8, wobei der Speicher (9) ein nicht-flüchtiger Speicher (9) ist.

10. Automatisierungsgerät nach Anspruch 9, wobei der Speicher (9) ein EEPROM oder ein FLASH-EPROM (9) ist.

## Claims

1. Automation device (1) with a bus element (2), comprising a bus connection (3) and at least one slot (7) for a module (8), said slot (7) having bus contacts (41, 42, 43, 44) for contact with an internal bus (4) going out from the bus connection (3), with a module (8) disposed at the slot (7) being a communication access unit at the internal bus (4), **characterised by** a memory unit (9) provided in the bus element (2), which can be written and/or read by the module (8).

2. Automation device according to claim 1, with the memory unit (9) being connected to the internal bus (4).

3. Automation device according to claim 2, with the memory unit (9) being an independent communication access unit at the internal bus (4).

4. Automation device according to claim 3, with the bus address of the memory unit (9) being predefinable.

5. Automation device according to claim 4, with the bus address of the memory unit (9) being predefinable by means of a setting device (10) provided at the bus element (2).

6. Automation device according to claim 4, with the bus address of the memory unit (9) being predefinable by means of setting software.

7. Automation device according to claim 1, with the slot (5) also having additional contact points (61, 62) to which the memory unit (9) is connected for electrical conduction purposes.

8. Automation device according to claim 7, with the additional contact points (61, 62) being contacts of a memory bus (6) for access to the memory unit (9).

9. Automation device according to one of claims 1 to 8, with the memory unit (9) being a non-volatile memory unit (9).

10. Automation device according to claim 9, with the memory unit (9) being an EEPROM or a FLASH-EPROM (9).

## Revendications

1. Appareil d'automatisation (1) avec une partie formant bus (2), qui comprend une connexion de bus (3) et au moins un emplacement d'enfichage (7) pour recevoir un module (8), lequel emplacement d'enfichage comporte des contacts de bus (41, 42, 43, 44) pour la mise en contact d'un bus interne (4) partant de la connexion de bus (3), un module (8) qui se trouve dans l'emplacement d'enfichage (7) étant utilisateur de communication sur le bus interne (4),
**caractérisé par** une mémoire (9) qui est prévue dans la partie formant bus (2) et dans laquelle le module (8) peut écrire et/ou lire.

2. Appareil d'automatisation selon la revendication 1, dans lequel la mémoire (9) est raccordée au bus interne (4).

3. Appareil d'automatisation selon la revendication 2, dans lequel la mémoire (9) est un utilisateur de communication indépendant sur le bus interne (4).

4. Appareil d'automatisation selon la revendication 3, dans lequel l'adresse de bus de la mémoire (9) peut être prescrite.

5. Appareil d'automatisation selon la revendication 4, dans lequel l'adresse de bus de la mémoire (9) peut être prescrite au moyen d'un dispositif de réglage (10) prévu sur la partie formant bus (2).

6. Appareil d'automatisation selon la revendication 4, dans lequel l'adresse de bus de la mémoire (9) peut être prescrite au moyen d'un logiciel de réglage.

7. Appareil d'automatisation selon la revendication 1, dans lequel l'emplacement d'enfichage (5) comporte des points de contact supplémentaires (61, 62) auxquels la mémoire (9) est reliée de façon électriquement conductrice.

8. Appareil d'automatisation selon la revendication 7, dans lequel les points de contact supplémentaires (61, 62) sont des contacts d'un bus de mémoire (6) pour l'accès à la mémoire (9).

9. Appareil d'automatisation selon l'une des revendications 1 à 8, dans lequel la mémoire (9) est une mémoire non volatile (9).

10. Appareil d'automatisation selon la revendication 9, dans lequel la mémoire (9) est une EEPROM ou une FLASH-EPROM (9).
